# FASCICULE DE BREVET EUROPEEN

(11) **EP 3 887 182 B1**
(45) Date de publication et mention de la délivrance du brevet: **17.08.2022**
(21) Numéro de dépôt: 19820823.3
(22) Date de dépôt: 05.11.2019
(51) Int. Cl.: B60H 1/34, F24F 13/14

(54) **AERATEUR MINCE A EFFET COANDA POUR VEHICULE AUTOMOBILE**
DÜNNE BELÜFTUNG MIT COANDA-EFFEKT FÜR EIN KRAFTFAHRZEUG
COANDA-EFFECT THIN AIR VENT FOR A MOTOR VEHICLE

(30) Priorité: 27.11.2018 FR 1871897
(43) Date de publication de la demande: 06.10.2021
(73) Titulaire: PSA Automobiles SA, 78300 Poissy (FR)
(72) Inventeur: FERNANDES RIBEIRO, Jean Francois, 75010 PARIS 10 (FR); BERTIN, Frederic, 78340 Les Clayes Sous Bois (FR); SOICHEZ, Cyril, 92370 Chaville (FR); DUTOT, Christophe, 94400 Vitry Sur Seine (FR)
(86) Numéro de dépôt international: PCT/FR2019/052611
(87) Numéro de publication internationale: WO 2020/109685

(56) Documents cités:
- DE-A1-102015 017 009
- JP-A- S62 228 833
- JP-A- 2017 013 783

## Description

### Domaine technique

La présente invention concerne d'une manière générale les aérateurs destinés à diffuser dans l'habitacle d'un véhicule automobile de l'air provenant du système de chauffage, de ventilation et de climatisation dudit véhicule.

### Technique antérieure

Un tel aérateur, connu par exemple de la demande de brevet française FR 2 956 065, comporte classiquement au moins un aérateur comprenant un canal délimité par un corps creux et apte à canaliser un flux d'air jusqu'à une ouverture de sortie débouchant dans l'habitacle du véhicule, ainsi qu'une série d'ailettes de déflexion parallèles montées rotative dans ce canal à proximité de l'ouverture de sortie. L'aérateur comprend également un actionneur relié mécaniquement à ces ailettes et permettant à l'utilisateur de commander sa rotation afin d'orienter le flux d'air en sortie du corps.

Un volet d'occultation pilotable par un mécanisme de commande dédié est en outre généralement monté pivotant dans le conduit en amont de ces ailettes entre une position d'ouverture maximale et une position de fermeture empêchant le flux d'air canalisé de s'échapper au travers de l'ouverture de sortie.

Ces aérateurs qui débouchent généralement sur la planche de bord du véhicule sont inesthétiques et impactent négativement le niveau de qualité perçu par les utilisateurs.

Afin de palier à ces inconvénients, la demande de brevet américaine US 2014/0357179 propose un aérateur comportant :
- un corps creux apte à canaliser un flux d'air depuis une ouverture d'entrée jusqu'à une ouverture de sortie débouchant sur une enceinte ;
- un noyau creux de guidage d'air à section ovoïdale logé rigidement dans le corps creux et définissant deux surfaces de guidage d'air à l'opposé l'une de l'autre, les deux surfaces de guidage et le corps creux délimitant ainsi deux canaux d'écoulement aptes à transporter respectivement vers l'ouverture de sortie une première et une seconde quantité d'air en provenance de l'ouverture d'entrée ; et
- une ailette s'étendant dans ledit corps creux en amont du noyau de guidage et montée pivotante par son extrémité aval autour d'un axe transversal de sorte à permettre d'ajuster en fonction de sa position le ratio entre les première et seconde quantités d'air.

Ainsi, selon la valeur de ce ratio, la direction du flux d'air sortant de l'aérateur et perçu par les utilisateurs sera modifiée. Lorsque les deux quantités d'air sont identiques, le flux d'air sortant s'étend selon une direction parallèle à l'axe du conduit.

Un tel aérateur met en œuvre le phénomène physique connu sous le nom d'effet « Coanda » selon lequel un flux guidé en s'attachant à des surfaces courbes présente une faible perte de charge et génère ainsi peu de bruit.

Il présente l'avantage d'être particulièrement esthétique (seule l'extrémité du noyau demeurant visible des usagers tandis que les autres éléments mécaniques étant quant à eux dissimulés) ce qui permet d'améliorer sensiblement le niveau de qualité perçue de l'ensemble de la planche de bord du véhicule.

Cependant, avec ce type d'aérateur, la section aéraulique de sortie varie considérablement en fonction de la position de l'ailette située en amont du noyau de guidage.

Cette section est ainsi deux fois plus faible lorsque cette ailette occupe sa position extrême basse ou haute que lorsqu'elle occupe sa position intermédiaire, ce qui se traduit par une vitesse de l'air nettement plus importante en sortie de l'aérateur engendrant de la turbulence, des pertes de charges et un bruit de fonctionnement beaucoup plus élevé (gain d'environ 7 à 8 dB).

Afin de limiter l'amplitude de variation de la section aéraulique en sortie de l'aérateur, la demande de brevet français FR 3083164 publiée après la date de dépôt de la présente invention divulgue un aérateur comportant un corps creux apte à canaliser un flux d'air depuis une ouverture d'entrée jusqu'à une ouverture de sortie débouchant sur une enceinte, une première ailette s'étendant dans ledit corps creux en étant montée pivotante par son extrémité amont autour d'un axe transversal et définissant deux surfaces de guidage d'air à l'opposé l'une de l'autre délimitant avec ledit corps creux deux canaux d'écoulement supérieur et inférieur aptes à transporter respectivement vers ladite ouverture de sortie une première et une seconde quantité d'air en provenance de ladite ouverture d'entrée, et une deuxième ailette s'étendant dans ledit corps creux en amont de ladite première ailette et montée pivotante par son extrémité aval autour dudit axe transversal de sorte à permettre d'ajuster en fonction de sa position le ratio entre les première et seconde quantités d'air, lesdites première et deuxième ailettes sont articulées l'une à l'autre par un mécanisme d'articulation à biellettes implanté à l'extérieur du corps creux et agencé de sorte que l'entrainement à pivotement dans une direction de ladite deuxième ailette entraine également le pivotement synchronisé dans la même direction de ladite première ailette.

Toutefois, ce mécanisme d'articulation s'avère assez complexe à mettre en œuvre et présente en outre des risques non négligeables de blocage par arc-boutement.

Le document JP-A-2017 013783 divulgue aussi un tel aérateur avec deux ailettes qui pivotent d'une manière synchronisée dans la même direction permettant de guider un flux d'air, avec un mécanisme moins complexe par engrenages, sans risque de blocage par arc-boutement.

Toutefois, ce mécanisme d'articulation présente un axe de pivotement de la première ailette qui est distant de l'axe de pivotement de la seconde ailette, laissant un espacement entre les deux ailettes créant un risque important d'avoir des bruits d'air au niveau de cet espacement.

### Exposé de l'invention

La présente invention vise donc à améliorer la situation.

Elle propose à cet effet un aérateur pour véhicule automobile tel que couvert par la revendication indépendante 1.

L'utilisation d'un tel mécanisme d'articulation permet de gérer de manière synchronisée avec un rapport de transmission prédéterminé le pivotement des deux ailettes et donc la directivité du flux d'air sortant de l'aérateur.

Ce type de mécanisme à train épicycloïdal présente en outre l'avantage d'être particulièrement fiable tout en présentant un coût de revient très raisonnable du fait de sa conception relativement simple.

Selon des caractéristiques préférées de l'aérateur selon l'invention, prises seules ou en combinaison :
- le rapport de transmission entre la vitesse de rotation dudit arc denté et la vitesse dudit premier pignon est inférieur à un, de sorte que ladite première ailette ait une vitesse de rotation inférieure à celle de ladite deuxième ailette ;
- ladite deuxième ailette est apte à être déplacée entre une position extrême basse dans laquelle ledit canal d'écoulement inférieur est fermé de sorte que la totalité dudit flux d'air circule dans ledit cana d'écoulement supérieur, et une position extrême haute où ledit canal d'écoulement supérieur est fermé de sorte que la totalité dudit flux d'air circule dans ledit canal d'écoulement inférieur ;
- ledit rapport de transmission est déterminé de sorte que la surface de guidage supérieure de la première ailette soit sensiblement parallèle à la paroi du corps creux située en regard de cette dernière lorsque ladite deuxième ailette occupe sa position extrême basse, et de sorte que la surface de guidage inférieure de cette première ailette soit sensiblement parallèle à la paroi du corps creux située en regard de cette dernière lorsque ladite deuxième ailette occupe sa position extrême haute ;
- ledit premier pignon est porté par une extrémité d'une première tige transversale formant ledit axe de pivotement et traversant les extrémités amont et aval imbriquées desdites ailettes ainsi qu'une paroi latérale dudit corps creux ;
- ledit arc est porté par une extrémité d'une seconde tige transversale fixée par son autre extrémité sur une tranche latérale de ladite première ailette, ladite seconde tige traversant une lumière oblongue en arc de cercle ménagée dans ladite paroi latérale et étant centrée sur ledit axe de pivotement ;
- ledit mécanisme d'articulation comporte en outre des moyens de commande aptes à permettre à un usager d'entraîner à rotation ledit arc ;
- lesdits moyens de commande sont constitués par la tranche externe dudit arc dont la surface est striée ou revêtue d'une couche de matériau anti-dérapant ;
- ledit aérateur comporte en outre une rangée d'ailettes de déflexion verticales parallèles montées pivotantes autour d'axes verticaux dans ledit corps creux en amont desdites première et deuxième ailettes, et étant solidaires en rotation par l'intermédiaire d'un organe de liaison les reliant entre elles.

L'invention concerne également sous un second aspect, un véhicule automobile comportant au moins un tel aérateur.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] est une vue simplifiée en coupe longitudinale verticale de l'aérateur selon l'invention dans laquelle la première et la deuxième ailettes occupent leur position intermédiaire ;
[Fig 2] représente une vue similaire à la figure 2 dans laquelle la première et la deuxième ailettes occupent leur position extrême basse ;
[Fig 3] une vue en perspective prise de trois quart dos d'une partie latérale de l'aérateur de la figure 1 portant le mécanisme d'articulation ; et
[Fig 4] représente une vue latérale en élévation de l'aérateur de la figure 1.

### Description détaillée

On définit sur les figures un repère orthogonal XYZ comprenant trois axes perpendiculaires deux à deux, à savoir :
- un axe X, définissant une direction longitudinale, parallèle à l'axe longitudinal du véhicule,
- un axe Y, définissant une direction transversale, horizontale, qui avec l'axe X définit un plan XY horizontal, et
- un axe Z, définissant une direction verticale, perpendiculaire au plan XY horizontal.

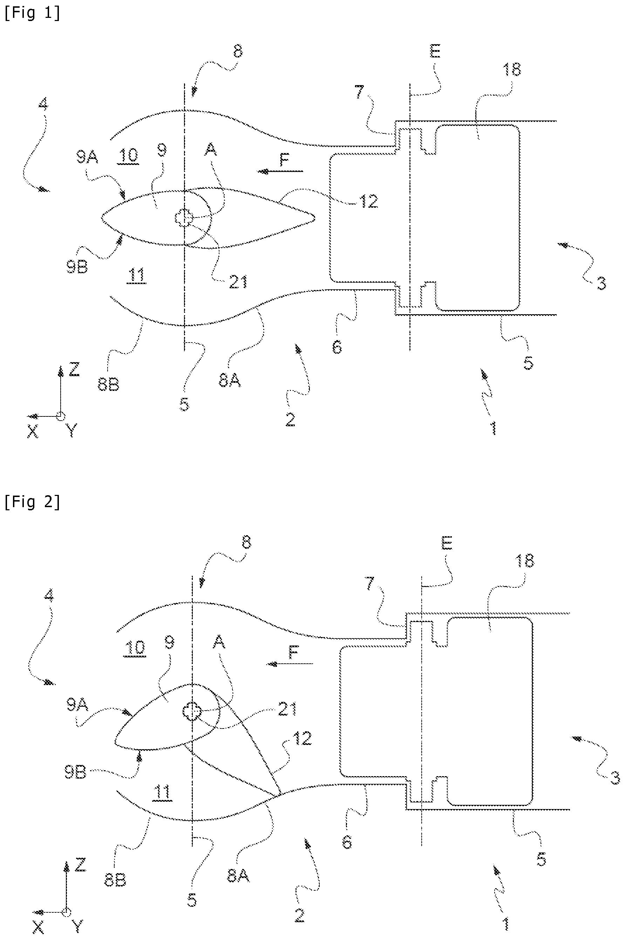

Les figures 1 à 4 représentent un aérateur 1 destiné à être implanté sur la planche de bord (non représentée) d'un véhicule afin de diffuser dans l'habitacle de ce véhicule l'air pulsé provenant d'un système de ventilation et/ou de climatisation.

Tel qu'illustré sur les figures 1 et 2, cet aérateur 1 comporte un corps creux 2 apte à canaliser un flux d'air F depuis une ouverture d'entrée 3 jusqu'à une ouverture de sortie 4 débouchant dans l'habitacle du véhicule.

Dans la suite de cette description, les termes « amont » et « aval » utilisés pour caractériser la position de certains éléments de l'aérateur 1 sont à considérer par rapport au sens de circulation du flux d'air F dans le corps creux 2.

Le corps creux 2 est constitué successivement, depuis l'ouverture d'entrée 3 vers celle de sortie 4, par un premier tronçon 5 présentant une section rectangulaire constante, un deuxième tronçon 6 présentant également une section rectangulaire constante de dimension légèrement plus réduite que celle du premier tronçon 5 et relié à ce dernier par un décrochement annulaire rectangulaire 7, ainsi qu'un troisième tronçon 8 présentant un profil longitudinal biconvexe symétrique.

Ce troisième tronçon 8 se compose d'une portion amont 8A présentant une section longitudinale verticale s'évasant selon le sens de circulation du flux d'air F, et d'une portion aval 8B présentant une section longitudinale verticale se rétrécissant selon ce même sens de circulation du flux d'air F.

L'aérateur 1 comporte également une première ailette de guidage d'air 9 s'étendant dans la portion aval 8B du troisième tronçon 8 du corps creux 2 et étant montée pivotante par son extrémité amont autour d'un axe horizontal transversal A, s'étendant dans le plan horizontal médian du corps 2 (c'est-à-dire à équidistance des parois supérieure et inférieure du troisième tronçon 8) et étant agencé longitudinalement au niveau du plan vertical de séparation S entre les portions amont 8A et aval 8B de ce troisième tronçon 8.

Dotée d'une extrémité aval en pointe, l'ailette de guidage 9 présente un profil longitudinal biconvexe symétrique définissant deux surfaces de guidage d'air supérieure 9A et inférieure 9B à l'opposé l'une de l'autre.

Les parois supérieure et inférieure des portions aval 8B du troisième tronçon 8, situées respectivement en regard des surfaces de guidage supérieure 9A et inférieure 9B de l'ailette 9, définissent ainsi avec ces dernières deux canaux d'écoulement supérieur 10 et inférieur 11.

Ces canaux 10 et 11 sont aptes à transporter respectivement vers l'ouverture de sortie 4 une première et une seconde quantité d'air en provenance de l'ouverture d'entrée 3.

L'aérateur 1 comporte également une deuxième ailette de guidage d'air 12 s'étendant dans la portion amont 8A du troisième tronçon 8 du corps creux 2.

Cette deuxième ailette 12 étant montée pivotante par son extrémité aval autour du même axe horizontal transversal A entre une position extrême basse dans laquelle le canal d'écoulement inférieur 11 est fermé (configuration de la figure 2) de sorte que la totalité dudit flux d'air F circule dans ledit canal d'écoulement supérieur 10, et une position extrême haute dans laquelle le canal d'écoulement supérieur 10 est fermé de sorte que la totalité dudit flux d'air F circule dans ledit canal d'écoulement inférieur 11.

Ainsi, en faisant varier son inclinaison, il est possible d'ajuster le ratio entre les première et seconde quantités d'air et donc la direction de sortie du flux d'air F par rapport à l'horizontale.

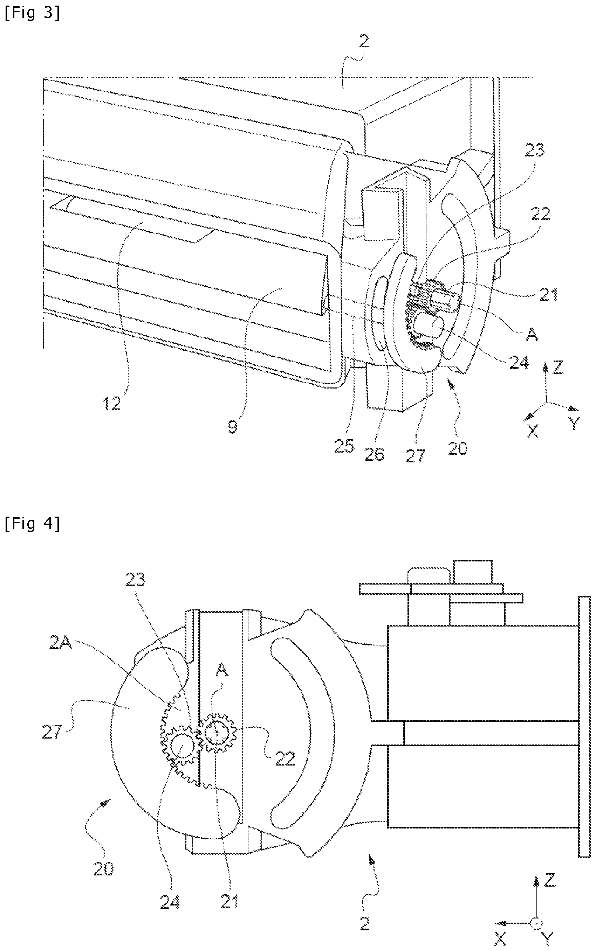

Les deux ailettes 9 et 12 sont en outre articulées l'une à l'autre par l'intermédiaire d'un mécanisme d'articulation 20 que l'on va maintenant décrire à l'appui des figures 3 et 4.

Ce mécanisme d'articulation 20 comporte une première tige transversale 21 formant l'axe de pivotement A et traversant les extrémités amont et aval imbriquées des première et deuxième ailettes 9, 12, ainsi qu'une paroi latérale 2A du corps creux 2 (figure 3).

Présentant en l'espèce une section en croix, la première tige 21 est solidaire en rotation avec la deuxième ailette 12 tandis qu'elle traverse à libre rotation la première ailette 9 au niveau d'un orifice circulaire non visible sur les figures.

La tige 21 est en outre verrouillée en translation vis-à-vis des deux ailettes 9, 12 de sorte que cette tige 21 et la deuxième ailette 12 sont liées rigidement l'une à l'autre.

L'extrémité saillante de cette première tige 21 porte un premier pignon 22 centré sur l'axe A et engrainé avec un deuxième pignon 23 monté à libre rotation sur un doigt transversal 24 prenant racine sur la face extérieure de la paroi latérale 2A du corps creux 2.

Le mécanisme 20 comprend également une seconde tige cylindrique transversale 25 fixée par l'une de ses extrémités sur la tranche latérale de la première ailette 9 située en regard de la paroi latérale 2A, cette tige 25 traversant une lumière oblongue en arc de cercle 26 ménagée dans la paroi latérale 2A et étant centrée sur l'axe de pivotement A des deux ailettes 9 et 12.

L'extrémité saillante de cette seconde tige 25 porte un arc 27 centré sur l'axe de pivotement A et dont la tranche interne présente une denture engrainée avec le deuxième pignon 23.

Le premier pignon 22, le deuxième pignon 23 et l'arc denté 27 constituent ainsi respectivement le pignon planétaire central, le pignon satellite et la couronne planétaire d'un train épicycloïdal.

Le mécanisme 20 comprend enfin des moyens de commande accessibles depuis l'extérieur du corps creux 2 et permettant à l'usager d'entrainer à rotation vers le haut ou vers le bas l'arc denté 27 et donc les deux ailettes 9, 12.

Ces moyens de commande sont ici constitués par la tranche externe de l'arc denté 27 dont la surface est avantageusement striée ou revêtue d'une couche de matériau anti-dérapant afin de faciliter sa préhension par le doigt d'un usager.

Ainsi, le déplacement dans une direction (i.e. : vers le haut ou vers le bas) de l'arc denté 27 entraine le pivotement synchronisé dans la même direction de la première ailette 9 (à laquelle cet arc 27 est lié rigidement) et de la deuxième ailette 12 (via le pignon planétaire central 22 et le pignon satellite 23), ce qui permet d'ajuster les dimensions des deux canaux d'écoulement supérieur 10 et inférieur 11 en fonction de la position angulaire de l'ailette 12 de sorte à limiter l'amplitude de variation de la section aéraulique en sortie de l'aérateur 1 induite par ce pivotement de l'ailette 12.

La vitesse de l'air sortant de l'aérateur 1 varie donc peu quelle que soit l'orientation verticale du flux d'air dictée par la position de cette ailette 12, ce qui assure un bruit de fonctionnement sensiblement homogène et discret.

Tel qu'illustré par la figure 4, les deux pignons 22, 23 et l'arc denté 27 sont agencés de sorte que les deux ailettes 9, 12 soient alignées dans le plan horizontal médian du corps 2 lorsque le deuxième pignon 22 est engrainé au milieu de la denture de l'arc 27.

Par ailleurs, le rapport de transmission entre la vitesse de rotation de l'arc denté 27 (égale à celle de la première ailette 9) et la vitesse du premier pignon 22 (égale à celle de la deuxième ailette 12) est inférieur à un, de sorte que la première ailette 9 ait une vitesse de rotation inférieure à celle de l'ailette 12 (c'est-à-dire un débattement angulaire inférieur).

De manière avantageuse, ce rapport de transmission est déterminé de sorte que la surface de guidage supérieure 9A de l'ailette 9 soit sensiblement parallèle à la paroi du corps creux 2 située en regard de cette dernière (i.e. :la paroi supérieure de la portion aval 8B du troisième tronçon 8) lorsque l'ailette 12 occupe sa position extrême basse (figure 2), et de sorte que la surface de guidage inférieure 9B de cette ailette 9 soit sensiblement parallèle à la paroi du corps creux 2 située en regard de cette dernière (i.e. : la paroi inférieure de la portion aval 8B du troisième tronçon 8) lorsque l'ailette 12 occupe sa position extrême haute.

Par « sensiblement », il faut entendre qu'un léger écart de l'ordre de 10° sera admis par rapport à une orientation strictement parallèle tout en restant inclus dans le cadre de l'invention.

Dans l'exemple de réalisation représenté sur les figures, le rapport de transmission est égal à ½ (le débattement angulaire de la première ailette 9 étant ainsi inférieur de moitié à celui de la deuxième ailette 12).

Tel qu'illustré sur la figure 1, l'aérateur 1 comporte en outre une rangée d'ailettes de déflexion verticales parallèles 18 montées pivotantes dans les premier et deuxième tronçons 5, 6 du corps 2 selon des axes verticaux E, et étant solidaires en rotation par l'intermédiaire d'une tige de liaison (non visible sur les figures) les reliant entre elles.

La variation de l'inclinaison de ces ailettes 18 permet ainsi d'ajuster la direction de sortie du flux d'air F par rapport au plan vertical médian du corps creux 2.

Le déplacement à pivotement des ailettes 18 est assuré de manière classique par l'intermédiaire d'un mécanisme de commande dédié non représenté et piloté par un actionneur pouvant être translaté horizontalement le long d'un axe transversal horizontal.

Selon des variantes de réalisation non représentées, le rapport de réduction entre les vitesses angulaires de la première et de la deuxième ailette est différent, ce dernier étant par exemple compris entre 1/1 et 1/3.

Selon d'autres variantes de réalisation non représentées, les moyens de commande sont différents.

Ces derniers peuvent par exemple être constitués par un curseur saillant de la tranche externe de l'arc denté et venu de moulage d'une seule pièce avec ce dernier et la première ailette.

Selon encore d'autres variantes de réalisation non représentées :
- les ailettes verticales peuvent pivoter sur une plage angulaire d'environ 180° de sorte qu'elles constituent également des moyens d'occultation aptes à obturer entièrement le corps creux de sorte à empêcher le flux d'air de s'échapper au travers de l'ouverture de sortie ; et/ou
- l'aérateur comporte un volet d'occultation spécifique ménagé en amont des ailettes verticales pour obturer le corps creux.

Bien entendu, la présente invention ne se limite pas aux formes de réalisation décrites et représentées, mais englobe également toutes les variantes d'exécution à la portée de l'homme du métier, qui sont incluses dans le cadre de l'invention qui est défini par les revendications ci-jointes.

## Revendications

1. Aérateur pour véhicule automobile comportant un corps creux (2) apte à canaliser un flux d'air (F) depuis une ouverture d'entrée (3) jusqu'à une ouverture de sortie (4) débouchant sur une enceinte, une première ailette (9) s'étendant dans ledit corps creux (2) en étant montée pivotante par son extrémité amont autour d'un axe transversal (A) et définissant deux surfaces de guidage d'air (9A, 9B) à l'opposé l'une de l'autre délimitant avec ledit corps creux (2) deux canaux d'écoulement supérieur (10) et inférieur (11) aptes à transporter respectivement vers ladite ouverture de sortie (4) une première et une seconde quantité d'air en provenance de ladite ouverture d'entrée (3), et une deuxième ailette (12) s'étendant dans ledit corps creux (2) en amont de ladite première ailette (9) et montée pivotante par son extrémité aval de sorte à permettre d'ajuster en fonction de sa position le ratio entre les première et seconde quantités d'air, lesdites première et deuxième ailettes (9, 12) étant articulées l'une à l'autre par un mécanisme d'articulation (20) de sorte que l'entrainement à pivotement dans une direction vers le haut ou vers le bas de ladite deuxième ailette (12) entraine également le pivotement synchronisé dans la même direction de ladite première ailette (9), ledit mécanisme d'articulation (20) comporte un premier pignon (22) centré sur ledit axe transversal (A), **caractérisé en ce que** ladite deuxième ailette (12) est montée pivotante par son extrémité aval autour dudit axe transversal (A), ledit premier pignon (22) est lié rigidement avec ladite deuxième ailette (12), ledit mécanisme d'articulation (20) comporte en outre un deuxième pignon (23) monté à libre rotation sur un doigt transversal (24) solidaire dudit corps creux (2) et engrainé avec ledit premier pignon (22), ainsi qu'un arc (27) centré sur ledit axe transversal (A) et lié rigidement à ladite première ailette (9), la tranche interne dudit arc (27) présentant une denture engrainée avec ledit deuxième pignon (23).

2. Aérateur selon la revendication 1, **caractérisé en ce que** le rapport de transmission entre la vitesse de rotation dudit arc denté (27) et la vitesse dudit premier pignon (22) est inférieur à un, de sorte que ladite première ailette (9) ait une vitesse de rotation inférieure à celle de ladite deuxième ailette (12).

3. Aérateur selon l'une des revendications 1 ou 2, **caractérisé en ce que** ladite deuxième ailette (12) est apte à être déplacée entre une position extrême basse dans laquelle ledit canal d'écoulement inférieur (11) est fermé de sorte que la totalité dudit flux d'air (F) circule dans ledit canal d'écoulement supérieur (10), et une position extrême haute où ledit canal d'écoulement supérieur (10) est fermé de sorte que la totalité dudit flux d'air (F) circule dans ledit canal d'écoulement inférieur (11).

4. Aérateur selon les revendications 2 et 3, **caractérisé en ce que** ledit rapport de transmission est déterminé de sorte que la surface de guidage supérieure (9A) de la première ailette (9) soit sensiblement parallèle à la paroi du corps creux (2) située en regard de cette dernière lorsque ladite deuxième ailette (12) occupe sa position extrême basse, et de sorte que la surface de guidage inférieure (9B) de cette première ailette (9) soit sensiblement parallèle à la paroi du corps creux (2) située en regard de cette dernière lorsque ladite deuxième ailette (12) occupe sa position extrême haute.

5. Aérateur selon l'une des revendications 1 à 4, **caractérisé en ce que** ledit premier pignon (22) est porté par une extrémité d'une première tige transversale (21) formant ledit axe de pivotement (A) et traversant les extrémités amont et aval imbriquées desdites ailettes (9, 12) ainsi qu'une paroi latérale (2A) dudit corps creux (2).

6. Aérateur selon la revendication 5, **caractérisé en ce que** ledit arc (27) est porté par une extrémité d'une seconde tige transversale (25) fixée par son autre extrémité sur une tranche latérale de ladite première ailette (9), ladite seconde tige (25) traversant une lumière oblongue en arc de cercle (26) ménagée dans ladite paroi latérale (2A) et étant centrée sur ledit axe de pivotement (A).

7. Aérateur selon l'une des revendications 1 à 6, **caractérisé en ce que** ledit mécanisme d'articulation (20) comporte en outre des moyens de commande aptes à permettre à un usager d'entraîner à rotation ledit arc (27).

8. Aérateur selon la revendication 7, **caractérisé en ce que** lesdits moyens de commande sont constitués par la tranche externe dudit arc (27) dont la surface est striée ou revêtue d'une couche de matériau anti-dérapant.

9. Aérateur selon l'une des revendications 1 à 8, **caractérisé en ce qu'**il comporte en outre une rangée d'ailettes de déflexion verticales (18) parallèles montées pivotantes autour d'axes verticaux (E) dans ledit corps creux (2) en amont desdites première et deuxième ailettes (9, 12), et étant solidaires en rotation par l'intermédiaire d'un organe de liaison les reliant entre elles.

10. Véhicule automobile comportant au moins un aérateur selon l'une des revendications 1 à 9.

## Patentansprüche

1. Belüftungsvorrichtung für Kraftfahrzeuge mit einem Hohlkörper (2), der einen Luftstrom (F) von einer Einlassöffnung (3) zu einer Auslassöffnung (4) leiten kann, die in einen Behälter mündet, wobei ein erster Flügel (9) in dem Hohlkörper (2) mit seinem stromaufwärtigen Ende um eine Querachse (A) schwenkbar gelagert ist und zwei gegenüberliegende Luftleitflächen (9A, 9B) definiert, die mit dem Hohlkörper (2) zwei obere (10) und untere (11) Strömungskanäle begrenzen, die jeweils zur Auslassöffnung transportiert werden können (4) eine erste und eine zweite Luftmenge aus der Einlassöffnung (3) und eine zweite Rippe (12), die sich in dem Hohlkörper (2) stromaufwärts der ersten Rippe (9) erstreckt und an ihrem stromabwärtigen Ende schwenkbar gelagert ist, um eine Einstellung des Verhältnisses zwischen der ersten und der zweiten Luftmenge in Abhängigkeit von ihrer Position zu ermöglichen, wobei die erste und die zweite Rippe (9, 12) durch einen Gelenkmechanismus (20) so miteinander gelenkig verbunden sind, dass der Schwenkantrieb in einer Aufwärts- oder Abwärtsrichtung der zweiten Rippe (12) erfolgt treibt auch das synchronisierte Schwenken der ersten Rippe (9) in die gleiche Richtung an, wobei der Gelenkmechanismus (20) ein erstes Ritzel (22) umfasst, das auf der Querachse (A) zentriert ist, **dadurch gekennzeichnet, dass** die zweite Rippe (12) mit ihrem stromabwärtigen Ende um die Querachse (A) schwenkbar gelagert ist, das erste Ritzel (22) starr mit der zweiten Rippe (12) verbunden ist, der Gelenkmechanismus (20) ferner ein zweites Ritzel (23) umfasst, das frei drehbar auf einem Querfinger (24) montiert ist, der mit dem Hohlkörper (2) fest verbunden ist und mit dem ersten Ritzel (22) sowie einem Bogen (27), der auf der Querachse (A) zentriert und starr mit der ersten Rippe (9) verbunden ist, in Eingriff steht, wobei der innere Rand des Bogens (27) eine Verzahnung aufweist, die mit dem zweiten Ritzel (23) in Eingriff steht.

2. Belüfter nach Anspruch 1, **dadurch gekennzeichnet, dass** das Übersetzungsverhältnis zwischen der Drehzahl des Zahnbogens (27) und der Drehzahl des ersten Ritzels (22) kleiner als eins ist, sodass die erste Rippe (9) eine Drehzahl hat, die geringer ist als die der zweiten Rippe (12).

3. Belüfter nach einem der Ansprüche 1 oder 2, **dadurch gekennzeichnet, dass** die zweite Rippe (12) zwischen einer unteren Endposition, in der der untere Strömungskanal (11) geschlossen ist, sodass der gesamte Luftstrom (F) in dem oberen Strömungskanal (10) zirkuliert, und einer oberen Endposition, in der der obere Strömungskanal (10) geschlossen ist, sodass der gesamte Luftstrom (F) in dem unteren Strömungskanal (11) zirkuliert, bewegbar ist.

4. Belüftungsvorrichtung nach den Ansprüchen 2 und 3, **dadurch gekennzeichnet, dass** das Übersetzungsverhältnis derart bestimmt ist, dass die obere Führungsfläche (9A) der ersten Rippe (9) im Wesentlichen parallel zu der dieser gegenüberliegenden Wand des Hohlkörpers (2) ist, wenn die zweite Rippe (12) ihre untere Endposition einnimmt, und dass die untere Führungsfläche (9B) dieser ersten Rippe (9) im Wesentlichen parallel zu der dieser gegenüberliegenden Wand des Hohlkörpers (2) ist, wenn die zweite Rippe (12) ihre obere Endposition einnimmt.

5. Lüfter nach einem der Ansprüche 1 bis 4, **dadurch gekennzeichnet, dass** das erste Ritzel (22) von einem Ende eines ersten Querstiftes (21) getragen wird, der die Schwenkachse (A) bildet und durch die ineinandergreifenden stromaufwärtigen und stromabwärtigen Enden der Flügel (9, 12) sowie eine Seitenwand (2A) des Hohlkörpers (2) verläuft.

6. Belüftungsvorrichtung nach Anspruch 5, **dadurch gekennzeichnet, dass** der Bogen (27) von einem Ende eines zweiten Querstiftes (25) getragen wird, der mit seinem anderen Ende an einem Seitenabschnitt der ersten Rippe (9) befestigt ist, wobei der zweite Stift (25) durch eine längliche kreisbogenförmige Öffnung (26) in der Seitenwand (2A) hindurchgeht und auf der Schwenkachse (A) zentriert ist.

7. Lüfter nach einem der Ansprüche 1 bis 6, **dadurch gekennzeichnet, dass** der Gelenkmechanismus (20) ferner Steuermittel umfasst, die es einem Benutzer ermöglichen, den Bogen (27) drehend anzutreiben.

8. Belüfter nach Anspruch 7, **dadurch gekennzeichnet, dass** die Steuermittel durch den äußeren Rand des Bogens (27) gebildet sind, dessen Oberfläche mit einer Schicht aus rutschfestem Material gezackt oder beschichtet ist.

9. Lüfter nach einem der Ansprüche 1 bis 8, **dadurch gekennzeichnet, dass** er außerdem eine Reihe von parallelen vertikalen Ablenkflügeln (18) umfasst, die um vertikale Achsen (E) in dem Hohlkörper (2) vor den ersten und zweiten Flügeln (9, 12) schwenkbar angebracht sind und durch ein sie miteinander verbindendes Verbindungsorgan drehfest miteinander verbunden sind.

10. Kraftfahrzeug mit mindestens einem Belüfter nach einem der Ansprüche 1 bis 9.

## Claims

1. An aerator for a motor vehicle comprising a hollow body (2) capable of channeling an air flow (F) from an inlet opening (3) to an outlet opening (4) opening out onto an enclosure, a first fin (9) extending into said hollow body (2) being mounted so as to pivot by its upstream end about a transverse axis (A) and defining two air guide surfaces (9A, 9B) opposite each other delimiting, with said hollow body (2), two upper (10) and lower (11) flow channels capable of conveying respectively towards said outlet opening (2) (4) a first and a second quantity of air from said inlet opening (3), and a second fin (12) extending into said hollow body (2) upstream of said first fin (9) and pivotally mounted by its downstream end so as to allow the ratio between the first and second quantities of air to be adjusted according to its position, said first and second fins (9, 12) being articulated to each other by a hinge mechanism (20) so that the pivotal drive in an upward or downward direction of said second fin (12) also drives When pivoting synchronously in the same direction of said first fin (9), said articulation mechanism (20) comprises a first pinion (22) centered on said transverse axis (A), **characterized in that** said second fin (12) is pivotally mounted by its downstream end about said transverse axis (A), said first pinion (22) is rigidly connected with said second fin (12), said articulation mechanism (20) further comprises a second pinion (23) mounted for free rotation on a transverse finger (24) integral with said hollow body (2) and meshed with said first pinion (22) and an arc (27) centered on said transverse axis (A) and rigidly connected to said first fin (9), the inner edge of said arc (27) having a toothing meshed with said second pinion (23).

2. An aerator according to claim 1, **characterized in that** the transmission ratio between the rotational speed of said toothed arc (27) and the speed of said first pinion (22) is less than one, so that said first fin (9) has a rotational speed lower than that of said second fin (12).

3. An aerator according to claim 1 or 2, **characterized in that** said second fin (12) is movable between a low end position in which said lower flow channel (11) is closed so that all of said air flow (F) flows in said upper flow channel (10), and an high end position in which said upper flow channel (10) is closed so that all of said air flow (F) flows in said lower flow channel (11).

4. An aerator according to claims 2 and 3, **characterized in that** said transmission ratio is determined so that the upper guide surface (9A) of the first fin (9) is substantially parallel to the wall of the hollow body (2) facing the latter when said second fin (12) occupies its lower extreme position, and so that the lower guide surface (9B) of this first fin (9) is substantially parallel to the wall of the hollow body (2) facing the latter when said second fin (12) occupies its upper extreme position.

5. Aerator according to one of Claims 1 to 4, **characterized in that** the said first pinion (22) is carried by one end of a first transverse rod (21) forming the said pivot axis (A) and passing through the interlocking upstream and downstream ends of the said fins (9, 12) and a lateral wall (2A) of the said hollow body (2).

6. An aerator according to claim 5, **characterized in that** said arc (27) is carried by one end of a second transverse rod (25) fixed by its other end to a lateral edge of said first fin (9), said second rod (25) passing through an oblong circular arc-shaped slot (26) provided in said lateral wall (2A) and being centered on said pivot axis (A).

7. An aerator according to one of claims 1 to 6, **characterized in that** said articulation mechanism (20) further comprises control means capable of allowing a user to rotate said arc (27).

8. An aerator according to claim 7, **characterized in that** said control means are constituted by the outer edge of said arc (27) whose surface is striated or coated with a layer of anti-slip material.

9. An aerator according to one of claims 1 to 8, **characterized in that** it further comprises a row of parallel vertical deflection fins (18) mounted pivotably about vertical axes (E) in said hollow body (2) upstream of said first and second fins (9, 12), and being integral in rotation by means of a connecting member connecting them together.

10. Motor vehicle comprising at least one aerator according to one of Claims 1 to 9.
